# EUROPEAN PATENT SPECIFICATION

(11) **EP 0 628 944 B1**
(45) Date of publication and mention of the grant of the patent: **05.08.1998**
(21) Application number: 94107982.4
(22) Date of filing: 24.05.1994
(51) Int. Cl.: G09G 3/36, G02F 1/133

(54) **Plasma-addressed display device**
Plasma-adressierbare Anzeigevorrichtung
Dispositif d'affichage adressé par plasma

(30) Priority: 25.05.1993 JP 145750/93
(43) Date of publication of application: 14.12.1994
(73) Proprietor: SONY CORPORATION, Tokyo (JP)
(72) Inventor: Kakizaki, Takehiro, Shinagawa-ku, Tokyo (JP)
(74) Representative: Müller, Frithjof E., Dipl.-Ing.

(56) References cited:
- EP-A- 0 500 085
- EP-A- 0 545 569

## Description

### BACKGROUND OF THE INVENTION

### 1. Field of the Invention

This invention relates to a plasma-addressed display device which includes a flat panel including a display cell such as a liquid crystal cell and a plasma cell placed one on the other, and more particularly to the structure of a plasma cell of a plasma-addressed display device of the type mentioned which addresses a display cell by selective plasma discharging.

### 2. Description of the Related Art

A plasma-addressed display device is disclosed, for example, in U.S. Patent No. 4,896,149 and U.S. Patent No. 5,077,553 which correspond to Japanese Published Unexamined (Kokai) Patent Application No. 1-217396 and is shown in FIG. 8. Referring to FIG. 8, the plasma-addressed display device shown has a layered flat panel structure which includes a display cell 101, a plasma cell 102 and a common intermediate sheet 103 interposed between the liquid crystal cell 101 and the plasma cell 102. The plasma cell 102 is formed using a lower substrate 104 which has a plurality of parallel grooves 105 formed on a surface thereof. The grooves 105 are closed up by the intermediate sheet 103 to individually define scanning channels 106 which are individually separate from each other. Each adjacent ones of the scanning channels 106 are isolated from each other by a barrier rib 107. Ionizable gas is enclosed in the scanning channels 106. A pair of parallel electrodes 108 and 109 are formed to extend in the longitudinal direction of the grooves 105 on a bottom surface of each of the grooves 105. The pair of electrodes 108 and 109 are made of a metal material and individually function as an anode and a cathode to ionize the gas in the corresponding scanning channel 106 to produce discharge plasma.

Meanwhile, the display cell 101 is constructed using an upper substrate 110. A liquid crystal layer 111 is filled between the upper substrate 110 and the intermediate substrate 103. A plurality of data electrodes 112 each formed from a transparent conductive film are formed on an inner surface of the upper substrate 110 and extend in parallel to each other. The data electrodes 112 extend perpendicularly to the scanning channels 106, and picture elements arranged in a matrix are defined at intersecting positions between the data electrodes 112 and the scanning channels 106.

In order to drive the plasma addressed display device described above, plasma discharge is produced in a line sequential condition in the individual scanning channels 106. To this end, the potential to a cathode relative to an anode is controlled so that the absolute value thereof may be higher than the firing or discharge starting voltage. If so-called dc driving is applied to cause plasma discharge in a scanning channel, then the inside of the scanning channel is held at the anode potential. Meanwhile, a predetermined driving signal is applied to the data electrode with reference to the anode potential so that an effective driving voltage is written into the liquid crystal layer 111 in response to the ratio in capacitance between the liquid crystal layer 111 and the intermediate substrate 103. After the plasma discharge comes to an end, the scanning channel 106 is put into a floating potential condition, and consequently, the effective driving voltage which has been written into the liquid crystal layer 111 is held as it is until next selective scanning takes place.

While the prior art plasma-addressed display device described above produces plasma discharge by dc driving, another plasma-addressed display device which is based on ac driving is also known and disclosed, for example, in Japanese Published Unexamined (Kokai) Patent Application No. 5-72519 which corresponds to U.S. Patent Application No. 07/942,773 filed on September 10, 1992 and assigned to the assignee of the present patent application. According to the ac driven plasma-addressed display device, the anodes and the cathodes are both coated with a dielectric material layer. The polarities of the potentials to the anodes and the cathodes are reversed between each adjacent frames to cause transfer of charge accumulated in the dielectric layer to produce plasma discharge.

In the dc driven plasma-addressed display device described above, each of the anodes and the cathodes is formed from a metal conductor body having an exposed surface. Accordingly, when plasma discharge is produced, each scanning channel is put into a substantially uniform anode potential condition, and consequently, an accurate driving signal (data voltage) can be written into each liquid crystal picture element. The dc driven plasma-addressed display device, however, has a subject to be solved in that abnormal discharge likely occurs, for example, between a cathode and a lower face of the intermediate substrate in place of normal discharge between an anode and a corresponding cathode. In particular, depending upon the relationship between the amplitude and the polarity of the data voltage applied to a data electrode and the cathode potential, a potential difference greater than the potential difference between the anode and the cathode may possible be produced, resulting in abnormal discharge.

On the other hand, in the ac driven plasma-addressed display device described above, since charge accumulated in the dielectric material film is transferred to cause reversal of the polarity of the potential between an anode and a corresponding cathode to produce plasma discharge, the operating voltage can be reduced comparing with the dc driven addressed display device. Further, the ac driven plasma-addressed display device is advantageous in that abnormal discharge occurs less likely since the discharge current is limited by the static capacitance of the dielectric material film. However, the prior art ac driven plasma-addressed display device has a subject to be solved in that, since each anode is coated with a dielectric material film, the discharge potential in each scanning channel is not fixed. In particular, when plasma discharge is produced, transfer of charge occurs, and the discharge comes to an end when the potential difference between the dielectric material film for the anode and the dielectric material film becomes equal to the discharge holding voltage as a result of the transfer of charge. The discharge holding voltage is likely varied by various conditions including the pressure of the ionizable gas and is difficult to control. Thus, if the discharge potential is not fixed, an accurate data voltage cannot be written into each individual liquid crystal picture element.

In the EP-A-0 545 569, which belongs to prior art according to Art.54(3) EPC, there is described an apparatus for addressing data storage elements which uses an ionizable gas excited by an AC energy source to store data in and read data out of the storage elements. The storage elements are defined by the overlapping areas of multiple column electrodes extending in a common direction on a first substrate and multiple channels extending in a common direction on a second substrate. A layer of dielectric material separates the first and the second substrates, which are positioned face-to-face and spaced-apart with the direction of the channels transverse to that of the column electrodes. Each of the channels is filled with an ionizable gas and includes two row electrodes electrically isolated from each other. The ionizable gas functions as an electrical switch that changes between a conducting or plasma state and a nonconducting or nonionized state in response to phase-displaced AC pulse signals. One of the two electrodes in each channel of the plasma cell is coated with a dielectric material layer, the other being exposed. The voltages applied to both electrodes are phase-displaced, non-overlapping negative going pulse trains with the same pulse height applied during each row strobe period.

### SUMMARY OF THE INVENTION

It is an object of the present invention to provide a plasma-addressed display device which achieves both of suppression of abnormal discharge in a scanning channel and stabilization of a discharge potential.

In order to attain the object described above, according to the present invention, there is provided a plasma-addressed display device according to the features of the appended claim 1.

Preferably, the reference potential is the zero potential.

The dielectric material layer may be formed from a magnesium oxide.

Where the display cell is constituted from a liquid crystal cell having a liquid crystal layer, the polarity of the data voltages may be reversed for each one frame or for each one line with reference to the reference potential to drive the liquid crystal cell by ac driving.

With the plasma-addressed display device, since the coated electrode is coated with the dielectric material layer, operation of the ac plasma type can be performed, and consequently, there is an advantage in that accumulation of charge in the dielectric material layer is effective to reduce the operation voltage in addition to the ac driving. Further, since the discharge current is limited by the electrostatic capacitance of the dielectric material layer, there is another advantage in that abnormal discharge is less liable to be produced and accordingly can be prevented effectively. Furthermore, since the exposed electrode has its surface exposed, the potential at the surface thereof directly exhibits a voltage applied thereto from the outside, and accordingly, the discharge potential in the scanning channel can be fixed to the anode potential. Consequently, there is a further advantage in that accurate writing of a data voltage can be assured.

The above and other objects, features and advantages of the present invention will become apparent from the following description and the appended claims, taken in conjunction with the accompanying drawings in which like parts or elements are denoted by like reference characters.

### BRIEF DESCRIPTION OF THE DRAWINGS

FIGS. 1A and 1B are a schematic sectional view and a plan view, respectively, showing a basic construction of a plasma-addressed display device according to the present invention;
FIG. 2 is a circuit diagram showing an equivalent circuit to a picture element of the plasma-addressed display device shown in FIGS. 1A and 1B;
FIG. 3 is a graph showing a voltage-current characteristic of a scanning channel;
FIG. 4 is a schematic view illustrating operation of the plasma-addressed display device shown in FIGS. 1A and 1B;
FIG. 5 is a waveform diagram illustrating operation of the plasma-addressed display device shown in FIGS. 1A and 1B;
FIG. 6 is a schematic sectional view of another plasma-addressed display device according to the present invention; and
FIG. 7 is a perspective view showing an exemplary one of conventional plasma-addressed display devices.

### DETAILED DESCRIPTION OF THE PREFERRED EMBODIMENTS

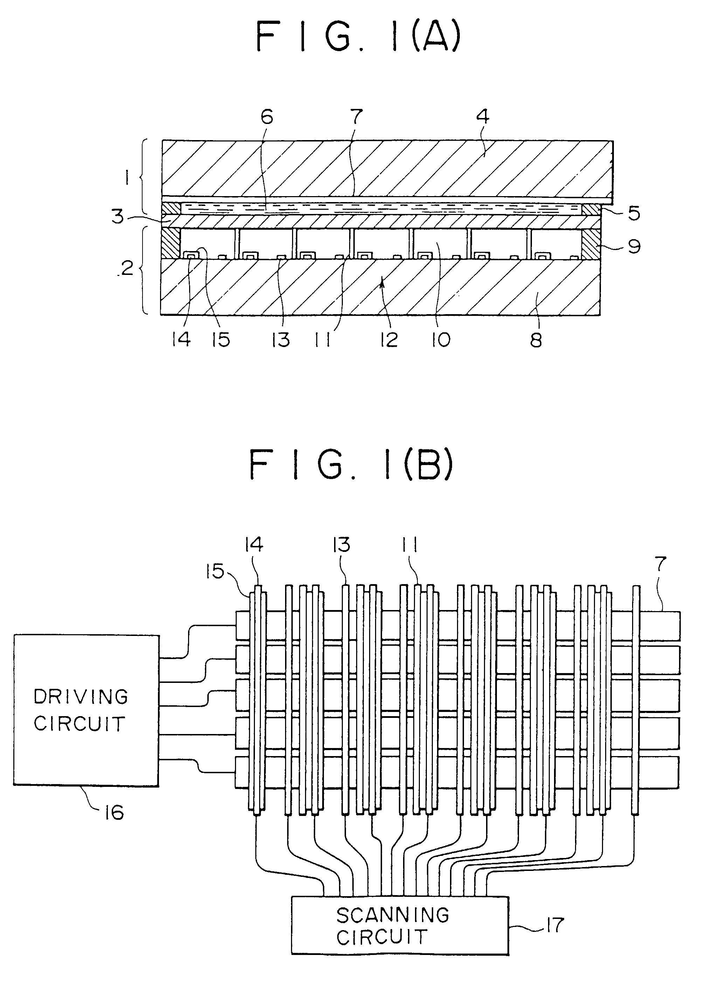

Referring first to FIGS. 1A and 1B, there is shown a basic construction of a plasma-addressed display device according to the present invention. The plasma-addressed display device shown has a structure wherein a display cell 1, a plasma cell 2 and an intermediate substrate 3 are layered with the intermediate substrate 3 interposed between the display cell 1 and the plasma cell 2. The intermediate substrate 3 is formed from a very thin glass plate material of, for example, 50 µm in thickness. The display cell 1 is constructed using an upper substrate 4 formed from a thick glass plate material or a like material. The upper substrate 4 is adhered to an upper face of the intermediate substrate 3 by a seal member 5 with a predetermined gap left between the substrate 4 and the intermediate substrate 3. The dimension of the gap is set, for example, to approximately 5 µm, and a liquid crystal layer 6 is filled and enclosed in the gap. A plurality of data electrodes 7 are formed on an inner surface of the upper substrate 4. The data electrodes 7 are formed in columns of a matrix from a transparent conductive film of ITO or a like material and are formed in a stripe pattern. It is to be noted that, in order to facilitate illustration, the columns of the data electrodes 7 are shown extending not in a vertical direction but in a horizontal direction.

Meanwhile, the plasma cell 2 is constructed using a lower substrate 8 formed from a thick glass plate material or a like material. The lower substrate 8 is fixedly adhered to a lower face of the intermediate substrate 3 by a seal material 5 with a predetermined space 10 left between them. A frit seal or a like member can be employed for the fixed adhesion. A plurality of barrier ribs 11 are formed at a predetermined pitch on a surface of the lower substrate 8 and extend in the direction of a row of the matrix. The barrier ribs 11 partition the space 10 described above to define a plurality of scanning channels 12 extending in the direction of a row of the matrix. Ionizable gas is filled in the space 10. The gas may be, for example, helium, argon, neon, or a suitable mixture of those gases. The barrier ribs 11 have a height of, for example, approximately 200 µm and are interposed between the intermediate substrate 3 and the lower substrate 8 so that they serve as support posts. The barrier ribs 11 can be formed in a pattern, for example, by screen printing. It is to be noted that, where the dimension in height of the space 10 is sufficiently small comparing with the arrangement pitch of the scanning channels 12, plasma discharge occurs locally, and therefore, the barrier ribs 11 may be omitted. A pair of exposed electrode 13 and coated electrode 14 are provided in the inside of each of the scanning channels 12. The exposed electrode 13 is made of a metal material such as Ni, Cr or Al and has an exposed surface. Meanwhile, the coated electrode 14 is made of a similar metal material, but the surface thereof is fully coated with a dielectric material film 15. The dielectric material film 15 may be made of such an oxide as, for example, MgO. The dielectric material film 15 has a thickness of, for example, approximately 20 µm. MgO is superior in a plasma resisting property and is effective to effectively control abnormal discharge or arc discharge.

A driving circuit 16 is connected to the display cell 1 and applies a driving signal (data voltage) with reference to a predetermined reference potential to each of the data electrodes 7. A scanning circuit 17 is connected to the plasma cell 2 and causes the scanning channels 12 to selectively discharge in a line sequential condition. Picture elements arranged in a matrix are defined by crossing points between the data electrodes 7 extending in the direction of a column of the matrix and the scanning channels 12 extending in the direction of a row of the matrix. Active matrix driving of the picture elements can be performed by supplying data voltages from the driving circuit 16 in synchronism with line sequential selective discharge by the scanning circuit 17.

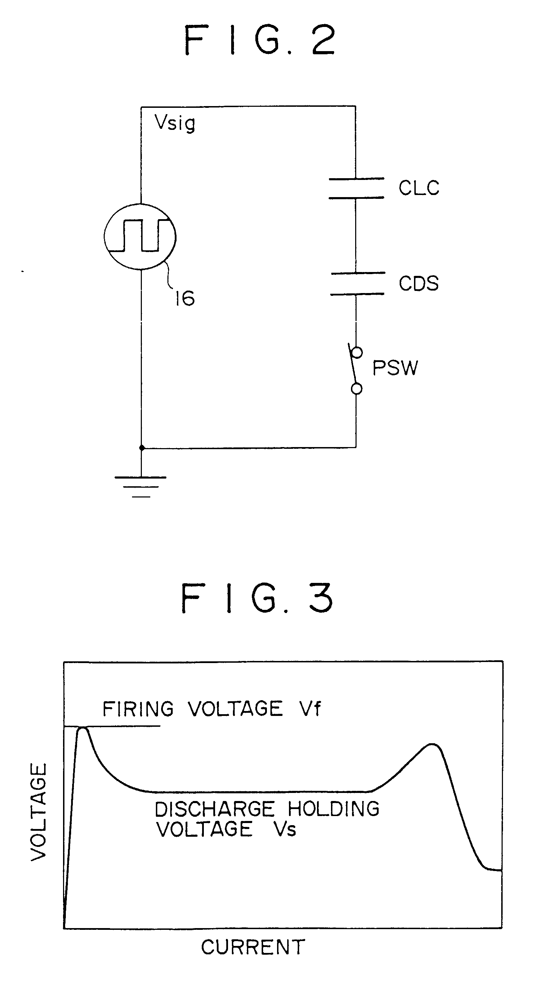

FIG. 2 shows an equivalent circuit to a picture element of the plasma-addressed display device shown in FIGS. 1A and 1B. The equivalent circuit shown is constituted from a series connection of a liquid crystal capacitor CLC, an additional capacitor CDS, and a plasma switch PSW. A data voltage Vsig is applied from the driving circuit 16 across the series connection. The liquid crystal capacitor CLC equivalently represents the liquid crystal layer 6 (FIG. 1) for one picture element, and the additional capacitor CDS equivalently represents the intermediate substrate 3 (FIG. 1) while the plasma switch PSW equivalently represents the scanning channel 12 (FIG. 1). When plasma discharge is produced, the plasma switch PSW is short-circuited so that the data voltage Vsig is divisionally supplied to the liquid crystal capacitor CLC and the additional capacitor CDS. When the plasma discharge thereafter comes to an end, the plasma switch PSW is changed over to an open state, and consequently, the charge accumulated in the liquid crystal capacitor CLC and the intermediate substrate CDS is held. Through the operations, the optical characteristic of the liquid crystal layer 6 is varied so that a desired image is displayed. Accordingly, the operation of the display apparatus includes "writing" of a data voltage within a period within which plasma discharge is produced, "fixing" of the data voltage at the point of time when the plasma discharge comes to an end, and "holding" of the data voltage within a period till next plasma discharge. Within the period of the holding operation, since the plasma switch PSW remains in an open state, even if the data voltage applied to the data electrode varies, the data voltage fixed by the fixing operation is maintained as it is.

AC driving is employed for plasma discharge, and consequently, a writing operation is performed twice. In particular, the plasma switch PSW performs an opening and closing operation twice. In the first time writing operation, the anode potential is applied to the coated electrode side, and consequently, the discharge potential is not fixed and a data voltage including an error is sampled. In the second time opening and closing operation, the anode discharge upon plasma discharging is applied to the exposed electrode side, and consequently, a correct data voltage is written. Although a data voltage including an error is written prior to writing of a correct data voltage, this is rewritten by a correct data voltage immediately after several µs. Since the correct data voltage is thereafter held for a period of a holding operation (for example, 32 ms), the data error in displaying of an image is approximately 0.03 % to the utmost, which does not matter at all in practical use.

Subsequently, operation of the plasma-addressed display device shown in FIG. 1 will be described in detail. In order to facilitate understanding, a voltage-current characteristic of a scanning channel will be described briefly with reference to FIG. 3. Plasma discharge is produced when a voltage higher than a predetermined firing or discharge starting voltage Vf is applied between a pair of electrodes, but stops when the voltage becomes lower than a predetermined discharge holding voltage Vs.

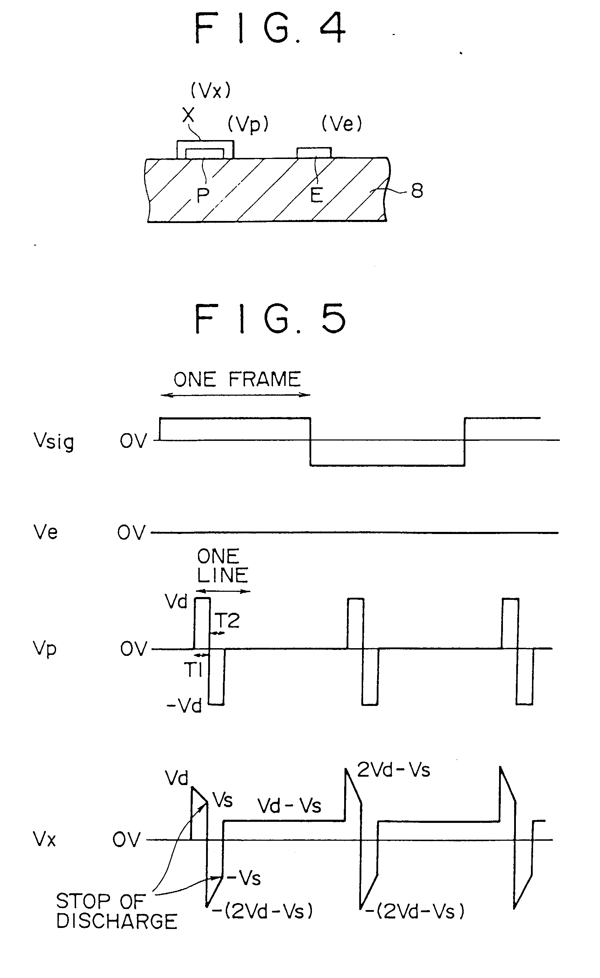

FIG. 4 defines a potential level necessary for description of operation. An exposed electrode formed on the lower substrate 8 is represented by E, and the potential at the exposed electrode is represented by Ve. Meanwhile, a coated electrode is represented by P, and the potential at the coated electrode P is represented by Vp. Further, a dielectric material film coated on the coated electrode P is represented by X, and the potential at the dielectric material film is represented by Vx.

With the presumptions given above, operation of the plasma-addressed display device according to the present invention will be described in detail with reference to a waveform diagram of FIG. 5. In the present plasma-addressed display device, dipole switching is employed. A data voltage Vsig is applied to the data electrode. The data voltage Vsig has a polarity which is reversed for each one frame with respect to a predetermined reference potential, which generally is the zero potential, to effect ac driving of the liquid crystal cell. It is to be noted that the polarity of the data voltage Vsig may alternatively be reversed for each one line. The potential Ve at the exposed electrode is fixed so that it may coincide with the center potential of the data voltage, that is, the zero potential. Meanwhile, two selection pulses are successively applied to the coated electrode within a selection period corresponding to one line. As can be recognized from the variation of the potential Vp of the coated electrode P, the first selection pulse has a voltage +Vd (for example, +300 V) having an absolute value higher than the discharge starting voltage Vf and has a pulse width T1 (for example, about 5 µs). When discharge is started and electric current flows, the static capacitance of the dielectric material film X on the coated electrode P is charged, and consequently, the surface potential Vx of the dielectric material film X gradually decreases from +Vd. Then, when the potential difference between the exposed electrode potential Ve and the dielectric material film surface potential Vx becomes smaller than the discharge holding voltage Vs (for example, 200 V), the discharge stops. In this instance, the static capacitance of the dielectric material film X is charged to -(Vd - Vs). Meanwhile, since a scanning channel is filled with a higher one of the electrode potentials, the lower face of the intermediate substrate becomes equal to the voltage Vs. Accordingly, the voltage Vsig - Vs is applied to the layered portion of the liquid crystal layer and the intermediate substrate so that first time writing is performed. While this writing includes an error since it is not performed with reference to the zero potential, the error amount is small as described hereinabove.

Subsequently, a second selection pulse of the reversed polarity is applied to the coated electrode P. The pulse has a height of -Vd (for example, -300 V) and a width of T2 (for example, about 5 µs). Since the formerly charged voltage -(Vd - Vs) is added to the voltage -Vd, the surface potential Vx of the dielectric material film X on the coated electrode P is -2Vd + Vs (for example, -400 V). Consequently, plasma discharge is produced readily. In such second time writing, since the scanning channel is filled with a higher one of the electrode potentials (that is, the potential Ve at the exposed electrode), the lower face of the intermediate substrate becomes equal to the zero potential.
Accordingly, the voltage Vsig is applied to the layered portion of the liquid crystal layer and the intermediate substrate, and consequently, a correct writing operation is performed. Further, also after the discharge comes to an end, the correctly written data voltage is held as it is. When a writing operation for a next frame is performed after lapse of the period of the holding operation, the potential difference for plasma discharge is 2Vd - Vs (for example, +400 V). In this manner, driving which has conventionally been performed with 400 V is performed now with a pulse of 300, and accordingly, the operation voltage can be reduced by ac driving. Or else, the operation voltage has a greater margin.

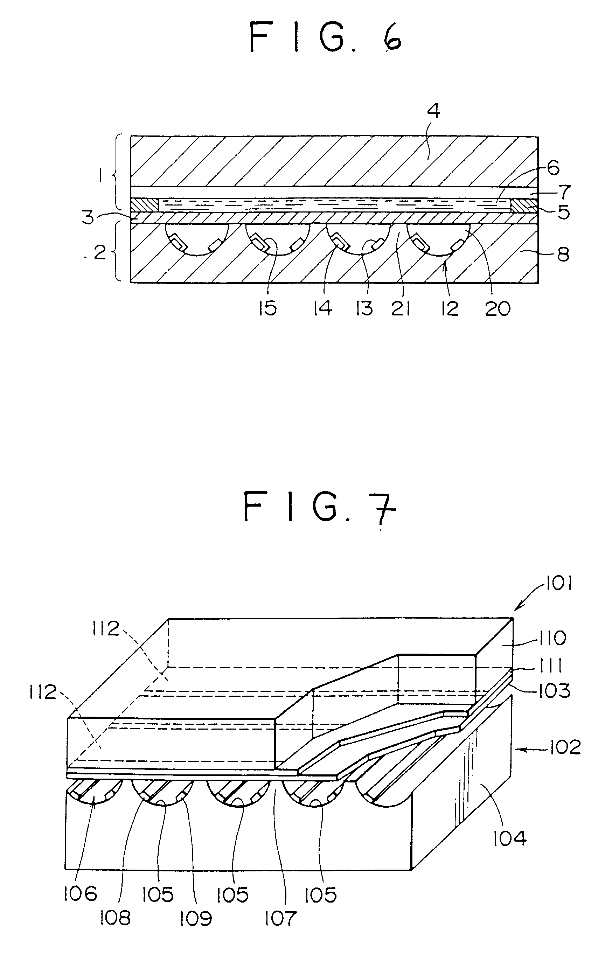

FIG. 6 shows another plasma-addressed display device to which the present invention is applied. The plasma-addressed display device of the present embodiment has a basically same structure as and accordingly is a modification to the plasma-addressed display device of the first embodiment described hereinabove with reference to FIG. 1. The plasma-addressed display device of the present embodiment is different from the plasma-addressed display device of the first embodiment in the structure of the scanning channels of a plasma cell 2. In particular, in the plasma-addressed display device of the present embodiment, the plasma cell 2 is constructed using a lower substrate 8. A plurality of parallel elongated grooves 20 are formed by etching on the surface of the lower substrate 8. The elongated grooves 20 are closed up tightly by an intermediate substrate 3 to form individually separate scanning channels 12. Each adjacent ones of the scanning channels 12 are isolated from each other by a barrier rib 21. Ionizable gas is enclosed in the inside of each of the elongated grooves 20. Further, a pair of exposed electrode 13 and coated electrode 14 are formed on a bottom surface of each of the elongated grooves 20 such that they extend in the longitudinal direction of the groove. The coated electrode 14 is coated with a predetermined dielectric material film 15.

Having now fully described the invention, it will be apparent to one of ordinary skill in the art that many changes and modifications can be made thereto without departing from the scope of the invention as defined in the appended claims.

## Claims

1. A plasma-addressed display device, comprising:
a display cell (1) having a plurality of data electrodes (7) therein;
a plasma cell (2) associated with the display cell (1) and having a plurality of addressing channels (12) in a direction perpendicular to the data electrodes (7), each one of said channels (12) having a pair of electrodes (13,14) which comprises a coated electrode (14) coated with a dielectric material layer (15) and an exposed electrode (13);
a driving circuit (16) provided to apply data voltages to the respective data electrodes on the basis of a reference potential; and
a scanning circuit (17) operable to control the application of strobe pulses to the addressing channels (12),
**characterized in that**
said scanning circuit (17) has switching means, said switching means being adapted to fix the potential to the exposed electrodes (13) to a reference potential and during a line selection period to apply to the coated electrode (14) of a selected channel a cathode potential of a negative polarity after the application of an anode potential of a positive polarity.

2. A plasma-addressed display device according to claim 1, wherein the reference potential is the zero potential.

## Patentansprüche

1. Plasma-adressierbare Anzeigevorrichtung, mit:
einer Anzeigezelle (1), die eine Mehrzahl von Datenelektroden (7) aufweist;
eine Plasmazelle (2), die der Anzeigezelle (1) zugeordnet ist und eine Mehrzahl von Adressierkanälen (12) in einer Richtung senkrecht zu den Datenelektroden (7) aufweist, wobei jeder einzelne der Kanäle (12) ein Paar von Elektroden (13, 14) aufweist, welche eine mit einer dielektrischen Materialschicht (15) beschichtete Elektrode (14) und eine freiliegende Elektrode (13) enthalten;
ein Treiberschaltkreis (16) zum Anlegen von Datenspannungen an die entsprechenden Datenelektroden auf der Basis eines Referenzpotentials; und
ein Abrasterschaltkreis (17) zum Steuern der Anlegung von Strobe- oder Taktpulsen an die Adressierkanäle (12),
**dadurch gekennzeichnet, daß**
der Abrasterschaltkreis (17) Schaltmittel aufweist, die derart beschaffen sind, um das Potential der freiliegenden Elektroden (13) auf einem Referenzpotential festzuhalten und um während einer Zeilenauswahlperiode an die beschichtete Elektrode (14) eines ausgewählten Kanals ein Kathodenpotential einer negativen Polarität nach der Anlegung eines Anodenpotentials einer positiven Polarität anzulegen.

2. Plasma-adressierbare Anzeigevorrichtung nach Anspruch 1, bei welcher das Referenzpotential das Nullpotential ist.

## Revendications

1. Dispositif d'affichage adressé par plasma, comprenant :
une cellule d'affichage (1) comportant une pluralité d'électrodes de données (7) à l'intérieur de celle-ci ;
une cellule de plasma (2) associée à la cellule d'affichage (1) et comportant une pluralité de canaux d'adressage (12) dans une direction perpendiculaire aux électrodes de données (7), chacun desdits canaux (12) comportant une paire d'électrodes (13, 14) qui comprend une électrode revêtue (14) revêtue d'une couche de matériau diélectrique (15) et une électrode exposée (13) ;
un circuit de commande (16) prévu pour appliquer des tensions de données aux électrodes de données respectives en se basant sur un potentiel de référence ; et
un circuit de balayage (17) susceptible d'être actionné pour commander l'application d'impulsions de commande aux canaux d'adressage (12),
caractérisé en ce que
ledit circuit de balayage (17) comporte des moyens de commutation, lesdits moyens de commutation étant adaptés pour fixer le potentiel au niveau des électrodes exposées (13) à un potentiel de référence et, pendant une période de sélection de ligne, pour appliquer à l'électrode revêtue (14) d'un canal sélectionné un potentiel de cathode d'une polarité négative après l'application d'un potentiel d'anode d'une polarité positive.

2. Dispositif d'affichage à plasma selon la revendication 1, dans lequel le potentiel de référence est le potentiel nul.
